# EUROPEAN PATENT SPECIFICATION

(11) **EP 1 539 886 B1**
(45) Date of publication and mention of the grant of the patent: **20.06.2007**
(21) Application number: 03792271.3
(22) Date of filing: 07.08.2003
(51) Int. Cl.: C09B 67/00, C09D 11/02

(54) **PROCESS FOR RHEOLOGY CHANGES IN AQUEOUS PIGMENT DISPERSIONS**
VERFAHREN ZU RHEOLOGISCHEN VERÄNDERUNGEN IN WÄSSRIGEN PIGMENTDISPERSIONEN
PROCEDE DE CHANGEMENTS RHEOLOGIQUES DANS DES DISPERSIONS AQUEUSES DE PIGMENTS

(30) Priority: 16.08.2002 EP 02405705
(43) Date of publication of application: 15.06.2005
(73) Proprietor: Ciba Specialty Chemicals Holding Inc., 4057 Basel (CH)
(72) Inventor: SMITH, Derek, Stewart, Hunter 11 Burnside Avenue, Renfrewshire, PA5 8UT (GB)
(86) International application number: PCT/EP2003/008754
(87) International publication number: WO 2004/018565

(56) References cited:
- WO-A-00/24679
- US-A- 6 153 001
- PATENT ABSTRACTS OF JAPAN & JP 10 060331 A (KAO CORP.), 3 March 1998 (1998-03-03)
- DATABASE WPI Derwent Publications Ltd., London, GB; AN 1998-028156 XP002229297 & JP 09 286943 A (CITIZEN WATCH CO LTD), 4 November 1997 (1997-11-04)
- KIM J C ET AL: "Effect of ultrasonication on the rheological behavior of alumina slurries with maltodextrin" MATERIALS LETTERS, NORTH HOLLAND PUBLISHING COMPANY. AMSTERDAM, NL, vol. 42, no. 6, March 2000 (2000-03), pages 390-393, XP004256394 ISSN: 0167-577X
- STOFFER, JAMES O. ET AL: "Ultrasonic dispersion of pigment in water based paints" JOURNAL OF COATINGS TECHNOLOGY ( 1991 ), 63(797), 61-8, XP009004810

## Description

The present invention relates to a process for preparing aqueous pigment compositions, especially aqueous dispersions or suspensions of organic or inorganic pigments, of improved rheological behaviour by ultrasonic treatment.

WO 00/24679 discloses a process for the removal of micro-biological contamination from aqueous pigment compositions by combining the use of chemical biocides with an ultrasonic treatment. No suggestions, however, are provided that ultrasonic energy might be used to achieve the effects according to the present invention, viz. besides a reduced viscosity (improved rheology) also an increased solids content of the pigment compositions obtained. Both properties are highly needed for a more economical handling of the pigment compositions and the colourant compositions, such as inks or paints, prepared thereof.

Further references are: US 6153001; JP 10060331; JP 09286943; Kim et al., Materials Letters, 42(6), 2000, 390-393; Stoffer et al., Journal of Coatings Technology, 63(797), 1991, 61-68.

Accordingly, it is the main object of the present invention to improve the rheological properties of aqueous pigment compositions.

These and other objects of the present invention will be described in the following.

Therefore, in a first aspect of the present invention, there is provided a process for improving the rheological properties of aqueous pigment compositions which comprises ultrasonic treatment at a frequency of 16 to 100 kHz of aqueous pigment dispersions of suspensions.

This first aspect can also be defined as method of using (use) of ultrasound (ultrasonic energy) for improving the rheological properties of aqueous pigment compositions.

According to another aspect of the present invention, the process for improving the rheological properties of aqueous pigment compositions by ultrasonic treatment is carried out in a (continous) flowing system (using e.g. an acoustic chamber) at a (relatively) high flow rate, i.e. for a relatively short treating time (residence time in the acoustic chamber).

The aqueous pigment compositions are those of organic or inorganic pigments.

The organic pigments comprise, but not exclusively, such pigments as monoazo, disazo, naphthol, dioxazone, azomethin, azocondensation, metal-complex, nitro, perinone, quinoline, anthraquinone, benzimidazolone, isoindoline, isoindolinone, quinacridone, hydroxyanthraquinone, aminoanthraquinone, anthrapyrimidine, indanthrone, flavanthrone, pyranthrone, antanthrone, isoviolanthrone, diketopyrrolopyrrole, carbazole, perylene, indigo or thioindigo pigments. Mixtures of the pigments may also be used.

### Preferred are organic pigments of the following chemical classes:

Monoazo (naphthol AS pigments: C.I. Pigment Red 2 and 23), disazo (diarylide yellow pigments: C.I. Pigment Yellow 12, 13, 14,17; diarylide orange pigments: C.I. Pigment Orange 34), naphthol (β-naphthol pigments), and metal-complex pigments, such as e.g. phthalocyanines (C.I. Pigment Blue 15, 15:1, 15:3), and azomethin metal-complex pigments,

For further details as to the organic pigments reference is made to Industrial Organic Pigments, W. Herbst, K. Hunger, 2nd edition, VCH Verlagsgesellschaft, Weinheim, 1997.

Inorganic pigments include among others titanium oxide pigments, iron oxide and hydroxide pigments, chromium oxide pigments, spinel type calcined pigments, lead chromate pigments, bismuth vanadate pigments, carbon black and Prussian Blue.
In this context, reference is also made to the Colour Index (C.I.), issued by the Society of Dyers and Colorists and The American Association of Textile Chemists and Colorists.

The aqueous pigment compositions suitable for use in the process according to the present invention include dispersions and solids suspensions of organic and inorganic pigments in water, containing further, as a rule, additives that enhance processing and applicational properties.

Examples of such additives are ethoxylated fatty alcohols(C₈-C₂₀), and alkyl (C₈-C₁₈) - phenols, such as octyl-, nonyl- or dodecyl phenols, sulfonated fatty acids, such as sulfuric acid ester of castor oil (turkey red oil), sulphonated naphthalenes and their derivatives, acrylic acid polymers (poyacrylic acid) and copolymers with styrene, homo- and co-polymers of substituted (alkyl-, halogeno-, cyano-substituted) acrylic acids, or polymers of 2-propenic acid, both water-soluble and as emulsion.

The term "solid" as defined herein includes particles of pigments and dyes where the particle can be an individual crystal, aggregate of crystals or agglomerate of aggregates ranging in size from a few nanometres to hundreds of microns together with additives which themselves are solutions or emulsions in water. Any level of solid may be employed in the suspensions. However, at very high solids contents, typically greater than about 65%, highly viscous materials are typically formed which, although usable in the present process, provide specific difficulties in the manufacturing process due to pumping limitations. Similarly, highly diluted suspensions, typically containing solids at levels of less than about 5%, may be processed (pumped) more easily but their low solids content can limit their utility for economic reasons. Thus solids suspensions containing from 20% to 70% of solids, preferably 30% to 60% by weight of the dispersion are preferred for use in the process of the present invention.

Further additives may be antifoams, such as tributyl phosphate or polysiloxanes (polydimethyl siloxanes) or (chemical) biocides.

Any level of chemical biocide may be employed in the compositions to be processed according to the present invention. Typically the chemical biocide is present a levels of from about 15 parts per million (ppm) by weight of the dispersion to about 500 ppm, most preferably from about 50 ppm to about 250 ppm by weight of the composition.
Chemical biocide as defined herein means a material which is capable of inhibiting the growth of microbiological contaminants in water-based systems. Examples of microbiological contaminants as defined herein include Gram positive and Gram negative bacteria, yeasts and fungi. Suitable chemical biocides include aldehydes and isothiazolones.

Suitable chemical biocides include aldehydes such as formaldehyde, dialdehydes such as glutardialdehyde (pentane-1,5 - dialdehyde), substituted and unsubstituted isothiazolin-3-one, such as N-methylisothiazol-3-one or N-octylisothiazolin-3-one or 1,2-benzisothiazolin-3-one, hexahydro-1,3,5-tris-(2-hydroxyethyl)-s-triazine, tetrakishydroxymethylphosphonium sulphate, dimethyl-N-alkylbenzammonium chloride, 2-(thiocyanomethyl)thio(benzothiazole), and mixtures thereof. It is our experience that the efficiency of a particular biocide is closely associated with the colourant chemical type. It should be understood that within the range of chemical biocides available some will be more effective than others with any particular solids dispersion.

Preferred chemical biocides for use herein are the substituted or unsubstituted isothiazolin-3-ones.

Ultrasound as defined herein means sound waves beyond the response of the human ear, notably 16 kHz or greater. The frequency ranges may be 16 to 100 kHz, preferably 16 to 40 kHz, and mostly preferred 16 to 20 kHz.

Being a sound wave, ultrasound can be transmitted through any substance, solid, liquid or gas, which possesses elastic properties. The movement of the vibrating body (the sound source) is communicated to the molecules of the substrate medium, each of which transmits the motion to an adjoining molecule before returning approximately to its original position. Besides the variation in the molecules' position when the sound wave travels through the medium there is a variation in pressure. At the point where the layers of molecules are crowded together (such as when the molecules are compressed) the pressure is higher than normal at that instant, whereas in the region where the layers are furthest apart (the rarefaction region) the pressure is lower than normal. lf a sufficiently large negative pressure is applied to a liquid (here it will be the acoustic pressure on rarefaction), such that the average distance between the molecules exceeds the critical molecular distance necessary to hold the liquid intact, the liquid will break down and voids or cavities will be created. These voids or cavities are known as cavitation bubbles. The production of such cavitation bubbles has been known for many years, and good examples are provided by either a ship's propeller or a paddle stirrer where the cavities are produced by the rapid rotation of the blade through the liquid. Once produced, these cavities or bubbles may grow in size until the maximum negative pressure has been reached. In the succeeding compression of the wave, however, they will be forced to contract, i.e. decrease in volume and some of them may even totally disappear. The shock waves produced on total collapse of the bubbles has been estimated to be of the order of several thousands of atmospheres, and are believed to be the cause of the considerable erosion observed for components in the vicinity of the bubble.

To completely rupture a liquid and hence produce a void or cavity requires a finite time. For sound waves with high frequencies, the time required to create the bubble may be longer than that available during the rarefaction cycle. For example, at 20 kHz the rarefaction cycle lasts 25 microseconds (= 0.5xfrequency), attaining its maximum negative pressure in 12.5 microseconds, whereas at 20 mHz the rarefaction cycle lasts only 0.025 microseconds. Thus it might be anticipated that as the frequency increases, the production of cavitation bubbles may become more difficult to achieve in the available time, and that greater sound intensities (i.e. greater amplitudes) would need to be employed (over these short periods) to ensure that the cohesive forces of the liquid are overcome. Since it is necessary for the negative pressure in the rarefaction cycle to overcome the natural cohesive forces acting in the liquid, any increase in viscosity will increase the threshold of cavitation.

A transducer is a device capable of converting one form of energy into another, a simple example being a loudspeaker which converts electrical to sound energy. Ultrasonic transducers are designed to convert either mechanical or electrical energy into high frequency sound. Ultrasonic transducers which may be employed in the process of the current invention include electrochemical transducers and magnetostrictive transducers.

Electrochemical transducers are based on either the piezoelectric or the magnetostrictive effect. Piezoelectric transducers utilise the piezoelectric effect of certain crystals such as quartz. On applying rapidly reversing charges to a piezoelectric material, fluctuations will be produced. This effect can be harnessed to transmit ultrasonic vibrations from the crystal through whatever medium it might be in, although it is not possible to drive a given piece of piezoelectric crystal efficiently at every frequency. Optimum performance will only be obtained at the natural resonance frequency of the particular sample, and this depends upon its dimensions. This is why the conventional sonochemistry equipment is of fixed frequency and why reports of comparative studies at different frequencies are uncommon. The use of different types of piezoelectric materials permits the building of ultrasonic generators of different powers and frequencies.

Magnetostrictive transducers rely on a change in the dimension of a suitable ferromagnetic material such as nickel or iron, by the application of a magnetic field. It is usually in the form of a rod (or bar) acting as the magnetic core within a solenoid. Applying a varying current to the coil produces a variation in the dimensions of the bar.

In industrial production situations the type of process will govern the choice of reactor design, whether it is batch or (continuous) flow-through.
The aqueous pigment dispersions can be subjected to the ultrasonic treatment by various techniques. The "flow through" technique essentially means a continuous opration where the flow is in a single direction and does not pass through the sonolator a second time, but all material has completely flown through once.
The "pass" technique covers the flow from one a vessel 'A' to a vessel 'B' and all the material has passed through the sonolator. By re-configuring the pipwork between the vessels, the material can then be passed in its entireity from vessel 'B' back to vessel 'A'. The essential point is that all the material passes through the machine a defined number of of times.

And finally, the "recirculation" technique means that the material from vessel 'A' passes through the sonolator and returns to vessel 'A' continuously. By this technique it is unlikely that all material from vessel 'A' will ever pass through the sonolator, but statistically, the longer the time period the more likely it is that the bulk will have passed through at least once, while some parts may have passed through many times and therfore received multiple treatments.

High intensity systems may employ a number of probes, but more effective is an acoustic chamber formed by two acoustically activated metal plates which enclose a flow system such as a Nearfield Accoustical Processor. These plates face towards each other and are separated by a small distance, typically a few millimetres to several centimetres, depending on the rheology of the fluid. Under these conditions any fluid flowing between these plates is subject to an ultrasonic intensity greater than that expected from simple doubling of a single plate intensity. Furthermore, if the two frequencies are slightly different from each other then turbulence is set up in the fluid which gives very efficient mixing, particularly in the case of slurries, thereby eliminating the need for stirring and improving the sonication of the medium.

Further it has been found, and this is an essential feature of the inventive process, that the ultrasonic treatment in the flow-through system preferably can be carried out for a relatively short period of time to achieve the desired and unexpected results. Therefore, the ultrasonic treatment may last from about 5 seconds up to 5 minutes, preferably from about 5 seconds to about 2 minutes, for example from 5 to 20 seconds.

An additional benefit of the Nearfield Accoustical Processor ultrasonic equipment is that with vibrating plates the system can be built to any size and can cope with very large throughputs of material. This same concept can be achieved by coupling numbers of probes into a pipe by means of 'T' sections, or the immersion of a submersible transducer inside a pipe itself.

During the propagation of a plane sound wave through a medium the intensity of the wave decreases as the distance from the ultrasonic radiation source increases. This attenuation may rise as a result of reflection, refraction, diffraction or scattering of the wave or it may be the result of converting some of the mechanical (kinetic) energy of the wave into heat. As the molecules of the medium vibrate under the action of the sound wave, they can experience viscous interactions which degrade the acoustic energy into heat, and it is this degraded acoustic energy by the medium which gives rise to the small observed bulk heating effect during the application of high power ultrasound.

Since it is necessary for the negative pressure in the rarefaction cycle to overcome the natural cohesive forces acting in the liquid, any increases in these forces, such as an increase in viscosity, will increase the threshold of cavitation. It is therefore advantageous to alter the distance between the accoustical plates to suit the rheology (flow characteristics) of the medium, or the amplitude (power) of the accoustical processor if temperature rise is not an issue.

Preferred for use herein is the Nearfield Accoustical Processor ultrasound equipment, and in particular the NAP-3606-HP Ultrasonic Reactor^{(R)} available from Advanced Sonic Processing Systems, 324 Christian Street, Oxford, CT 06478, USA. For the effective sonolation treatment of water-borne solids suspensions containing up to 70% solids it has been found that the frequencies in the range of from 16 kHz to 20 kHz; electrical power consumption of up to 4000 watts and a diaphragm plate spacing of from 3 millimetres to 50 millimetres are sufficient.
Utility of alternative sonolation equipment as specified herein before will require adjustment of the requisite frequency, chamber volume and residence time in order to define the optimal conditions for effective treatment. Such adjustment and analysis is within the knowledge of the skilled operator.
Generally, ultrasound is applied having the requisite characteristics or parameters of time, frequency and power level to effectively achieve the desired results, i.e. the decrease of viscosities and the increased particle (pigment) loading.

It is assumed that - but without being stuck to these assumptions - that by ultrasonic treatment a structural re-arangement of the pigment fluid system is taking place. Normally, water is structurally "locked up" in a system as solid surfaces (of the pigments) and surfactants both have a strong affinity for the available water, and the water is the only component which can flow.
Ultrasound can possibly release the water from the structure of the system (hence the viscosity reduces) by causing a rearrangement of the component inter-relationships in the system.
If a product is needed (sold) at a given viscosity, then the solids loading can be increased to achieve the original viscosity figure, hence improving the economics of the production operation.
Alternatively, if one wishes to operate a colour concentrate dispensing system the lower viscosity would be desirable.

The inventively obtained pigment compositions show improved, more economical, handling properties, such as a significant particle (pigment) loading and a reduced viscosity, and lead, therefore, to considerable advantages when preparing colourant compositions, such as inks or paints, thereof.

The following non-limiting Examples further illustrate the present invention. Parts and percentages are by weight, if not otherwise indicated. Temperatures are indicated in degrees centigrade.

### Examples

Aqueous pigment dispersions available as UNISPERSE^{(R)} brands from Ciba Specialty Chemicals (UK) Ltd., are passed through a sonolator chamber (Nearfield Acoustical Processor - NAP Reactor^{(R)}, 3606-HP-TC) to assess the influence of ultrasound on the rheologies of these commercial products.

The measurable variables being:

### Power input:

15 to 16 amperes at constant 120 volts (from 1 transducer bank = 33 amperes for 2 (all) transducer banks = 4 Kilowatt of electrical power converted to acoustic energy).
As a rule sufficient power is applied to ensure that the phenomenon of cavitation is taken place within the acoustic chamber, and it is the cavitation bubbles which bring about the effect.

### Power density/chamber volume:

The chamber volume is variable between 0.125 litres and 4.0 litres giving nominal power densities between 1 Kilowatt/litre and 32 Kilowatt/litre (at maximum power= 16.5 amperes on each transducer bank).

### Flow rate :

The residence time in the sonolator chamber is about 5 to 20, preferably 5 to 10 seconds.

A Carri-med^{(R)} rheometer is used to measure the rheology of aqueous dispersions before and after sonolation. Viscosity of each dispersion is calculated by dividing the shear stress by the shear rate, measured in milli Pascal seconds (mPa.s).
The shear rate is the number of rotations (6.2 cm disc) per second, measured in reciprocal seconds; the shear stress is the stress applied, measured in Pascals (Pa).

The aqueous dispersions(UNISPERSE^{(R)} brands) of the organic (inorganic) pigments contain as a rule 35 to 45% (50 to 65%) by weight of the pigment, about 35 to 50% (30 to 40%) of water, and as further additives sufficient amounts of e.g. dispersants (ethoxylated fatty alcohols, naphthalene sulfonic acid-formaldehyde adducts, sulfonated fatty acids), polymers (homo- and copolymers based on acrylic acid and substituted acrylic acids), antifoams (polydimethyl siloxanes, tributyl phosphate), and biocides (glutardialdehyde, unsubstituted or substituted isothiazolin-3-ones, etc.)

The following UNISPERSE^{(R)} products are subjected to the ultrasonic treatment:

| | |
|---|---|
| (1) Red FBN-PI | C.I. Pigment Red 2 |
| (2) Orange F2G-Pl | C.I. Pigment Orange 34 |
| (3) Yellow B-Pl | C.I. Pigment Yellow 13 |
| (4) Yellow BAW-Pl | C.I. Pigment Yellow 13 |
| (5) Yellow BRM-Pl | C.I. Pigment Yellow 14 |
| (6) Red RBS-PI | C.I. Pigment Red 23 |
| (7) Blue B-Pl | C.I. Pigment Blue15 |
| (8) Red Oxide R-S | C.I. Pigment Red 101 (iron oxide) |
| (9) Yellow Oxide M-S | C.I. Pigment Yellow 42 (iron oxide) |
| (10) Bismuth Vanadate ¹⁾ | C.I. Pigment Yellow 184 |

| | |
|---|---|
| ¹⁾ Ciba^{(R)} IRGACOLOR^{(R)} brand | |

All dispersions are subjected to the same conditions in terms of power density and residence time.
Colouristics measured on each product immediately after sonolation indicated that, with the exception of Red Oxide R-S, no discernible strength, shade or transparency/opacity changes took place. In the case of Red Oxide R-S, strength increased by 9%, with ΔC 1.0 and ΔH 0.7Y.
The viscosity effect (decrease) is irreversible.

The following Table 1 shows the results.

**Table 1**

| UNISPERSE | Viscosity (mPa.s) (before sonolation) | Viscosity (mPa.s) (after sonolation) | Viscosity Decrease |
|---|---|---|---|
| Red FBN-PI | 51 | 43 | 16% at 200 Pa |
| Orange F2G-PI | 179 | 164 | 8% at 200 Pa |
| Yellow B-PI | 53 | 49 | 7% at 200 Pa |
| Yellow BAW-PI | 19 | 16 | 16% at 70 Pa |
| Yellow BRM-PI | 34 | 25 | 27% at 100 Pa |
| Red RBS-PI | 79 | 73 | 8% at 200 Pa |
| Blue B-PI | 75 | 74 | 1 % at 200 Pa |
| Red Oxide R-S | 49 | 33 | 33% at 100 Pa |
| Yellow Oxide M-S | 43 | 39 | 10% at 100 Pa |
| Bismuth Vanadate | 151 | 47 | 69% at 200 Pa |

## Claims

1. A process for improving the rheological properties of aqueous pigment compositions which comprises ultrasonic treatment at a frequency of 16 to 100 kHz of aqueous pigment dispersions or suspensions, wherein the ultrasonic treatment is carried out in a flow-through-, single pass- or re-circulation-system for a period of time from 5 seconds up to 5 minutes.

2. The process according to claim 1 wherein the pigment compositions contain organic or inorganic pigments, or mixtures thereof.

3. The process according to claim 2 wherein the organic pigments are monoazo, disazo, azomethin, naphthol (β-naphtol) or metal-complex pigments, such as phthalocyanines and azomethin metal-complex pigments.

4. The process according to claim 2 wherein the inorganic pigments are titanium oxide pigments, iron oxide and hydroxide pigments, chromium oxide pigments, spinel type calcined pigments, lead chromate pigments, bismuth vanadate pigments, carbon black and Prussian Blue,

5. The process according to any of claims 1 to 4 wherein the solids content of the aqueous pigment compositions is from 20 to 70, preferably from 30 to 60%, based on the weight of the composition,

6. The process according to any of claims 1 to 5 wherein the aqueous pigment compositions contain further additives, including polymers, dispersants, antifoams and biocides.

7. The process according to any of claims 1 to 6 wherein the ultrasonic treatment is carried out in a flow-through-, single pass- or re-circulation-system for a period of time from 5 seconds to about 2 minutes.

8. The process according to any of claims 1 to 7 wherein the frequency of ultrasound is from 16 to 40 kHz, preferably from 16 to 20 kHz.

## Patentansprüche

1. Verfahren zur Verbesserung der rheologischen Eigenschaften von wässerigen Pigmentzusammensetzungen, umfassend die Ultraschallbehandlung bei einer Frequenz von 16 bis 100 kHz von wässerigen Pigmentdispersionen oder -suspensionen, wobei die Ultraschallbehandlung in einem Durchfluß-, Einzeldurchgangs- oder Rezirkulationssystem für einen Zeitraum von 5 Sekunden bis zu 5 Minuten durchgeführt wird.

2. Verfahren nach Anspruch 1, wobei die Pigmentzusammensetzungen organische oder anorganische Pigmente oder Gemische davon enthalten.

3. Verfahren nach Anspruch 2, wobei die organischen Pigmente Monoazo-, Disazo-, Azomethin-, Naphthol- (β-Naphtol-) oder Metall-Komplex-Pigmente, wie Phthalocyanin- und Azomethinmetall-Komplex-Pigmente sind.

4. Verfahren nach Anspruch 2, wobei die anorganischen Pigmente Titanoxidpigmente, Eisenoxid- und -hydroxidpigmente, Chromoxidpigmente, kalzinierte Pigmente vom Spinelltyp, Bleichromatpigmente, Bismutvanadatpigmente, Ruß und Preußisch Blau sind.

5. Verfahren nach einem der Ansprüche 1 bis 4, wobei der Feststoffgehalt der wässerigen Pigmentzusammensetzungen 20 bis 70, bevorzugt 30 bis 60 % beträgt, bezogen auf das Gewicht der Zusammensetzung.

6. Verfahren nach einem der Ansprüche 1 bis 5, wobei die wässerigen Pigmentzusammensetzungen weitere Additive, einschließlich Polymere, Dispergiermittel, Antischaummittel und Biozide, enthalten.

7. Verfahren nach einem der Ansprüche 1 bis 6, wobei die Ultraschallbehandlung in einem Durchfluß-, Einzeldurchgangs- oder Rezirkulationssystem für einen Zeitraum von 5 Sekunden bis etwa 2 Minuten durchgeführt wird.

8. Verfahren nach einem der Ansprüche 1 bis 7, wobei die Frequenz des Ultraschalls 16 bis 40 kHz, bevorzugt 16 bis 20 kHz beträgt.

## Revendications

1. Procédé d'amélioration des propriétés rhéologiques de compositions aqueuses de pigments qui comprend un traitement ultrasonique à une fréquence de 16 à 100 kHz de dispersions ou de suspensions aqueuses de pigments, dans lequel on effectue le traitement ultrasonique dans un système d'écoulement, à simple passe ou à recirculation pendant une période de temps de 5 secondes à 5 minutes.

2. Procédé selon la revendication 1, dans lequel les compositions de pigments contiennent des pigments organiques ou inorganiques, ou des mélanges de ceux-ci.

3. Procédé selon la revendication 2, dans lequel les pigments organiques sont des pigments monoazoïques, disazoïques, azométhine, naphtol (β-naphtol) ou des pigments de complexes de métaux, tels que des phtalocyanines et des pigments de complexes de métaux avec l'azométhine.

4. Procédé selon la revendication 2, dans lequel les pigments inorganiques sont des pigments d'oxyde de titane, des pigments d'oxyde et d'hydroxyde de fer, des pigments d'oxyde de chrome, des pigments calcinés de type spinelles, des pigments de chromate de plomb, des pigments de vanadate de bismuth, du noir de carbone et du bleu de Prusse.

5. Procédé selon l'une quelconque des revendications 1 à 4, dans lequel la teneur en matières solides des compositions aqueuses de pigments est de 20 à 70, de préférence de 30 à 60 %, sur la base du poids de la composition.

6. Procédé selon l'une quelconque des revendications 1 à 5, dans lequel les compositions aqueuses de pigments contiennent d'autres additifs, y compris des polymères, des dispersants, des antimousses et des biocides.

7. Procédé selon l'une quelconque des revendications 1 à 6, dans lequel le traitement ultrasonique est effectué dans un système d'écoulement, à passe unique ou à recirculation pendant une période de temps de 5 secondes à environ 2 minutes.

8. Procédé selon l'une quelconque des revendications 1 à 7, dans lequel la fréquence d'ultrasons est de 16 à 40 kHz, de préférence de 16 à 20 kHz.
